# EUROPÄISCHE PATENTSCHRIFT

(11) **EP 3 322 763 B1**
(45) Veröffentlichungstag und Bekanntmachung des Hinweises auf die Patenterteilung: **26.02.2020**
(21) Anmeldenummer: 16734616.2
(22) Anmeldetag: 29.06.2016
(51) Int. Cl.: B05C 9/12, B23K 26/08, B23K 26/324, B23K 26/38, B26D 7/10, B65H 35/02, B23K 26/323, B23K 26/21, C09J 7/21

(54) **VORRICHTUNG ZUR HERSTELLUNG EINES KLEBEBANDES**
DEVICE FOR PRODUCING AN ADHESIVE TAPE
DISPOSITIF DE FABRICATION D'UN RUBAN ADHÉSIF

(30) Priorität: 15.07.2015 DE 202015103713 U; 30.03.2016 DE 202016101692 U
(43) Veröffentlichungstag der Anmeldung: 23.05.2018
(73) Patentinhaber: certoplast Technische Klebebänder GmbH, 42285 Wuppertal (DE)
(72) Erfinder: RAMBUSCH, Peter, 42115 Wuppertal (DE); RAMBUSCH, René, 42285 Wuppertal (DE); LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2016/065199
(87) Internationale Veröffentlichungsnummer: WO 2017/009049

(56) Entgegenhaltungen:
- EP-A1- 0 534 300
- EP-A2- 0 267 604
- EP-A2- 1 300 452
- EP-A2- 1 829 948
- DE-U1-202011 110 445
- GB-A- 2 266 538
- US-A1- 2007 234 862

## Beschreibung

Die Erfindung betrifft eine Vorrichtung zur Herstellung eines Klebebandes, insbesondere eines Wickelbandes zur Ummantelung von langgestrecktem Gut, vorzugsweise eines Wickelbandes zur Ummantelung von Kabelsätzen in Automobilen, mit einer Vorratseinheit zum Zuführen eines bandförmigen textilen Trägers des Klebebandes aus überwiegend Kunststofffasern, und mit einer Beschichtungseinheit zum Aufbringen einer wenigstens streifenförmigen Klebstoffbeschichtung auf zumindest einer Seite des Trägers.

Mithilfe eines solchen Vorrichtung kann beispielhaft ein Klebeband, insbesondere ein Wickelband zur Ummantelung von langgestrecktem Gut, vorzugsweise ein Wickelband zur Ummantelung von Kabelsätzen in Automobilen, mit einem bandförmigen textilen Träger und mit einer wenigstens streifenförmigen Klebstoffbeschichtung auf zumindest einer Seite des Trägers hergestellt werden, wobei der Träger mit zumindest einer Schnittkante und/oder Perforation ausgerüstet ist.

Eine Vorrichtung zur Herstellung eines Klebebandes der zuvor beschriebenen Auslegung wird beispielhaft in der EP 1 108 769 A2 beschrieben. An dieser Stelle kommt ein Träger aus einem Vliesmaterial zum Einsatz, wobei der fragliche Träger mit Perforationen ausgerüstet ist. Durch diese Perforationen lässt sich das solchermaßen hergestellte Klebeband an gewünschten Stellen einreißen. Die Perforationen werden vorliegend durch thermisches Bonden hergestellt.

Klebebänder und insbesondere Wickelbänder des zuvor beschriebenen Aufbaus kommen typischerweise bei der Ummantelung von Kabelsätzen in Automobilen zum Einsatz. Dies wird beispielsweise in der DE 103 29 994 A1 im Detail beschrieben. Eine vergleichbare Vorgehensweise ist Gegenstand der WO 2012/048 912 A1. In beiden Fällen wird der Träger mit einem oder mehreren Klebstoffstreifen ausgerüstet, welche nur einen Bruchteil der Fläche des Trägers bedecken.

Die Herstellung von Klebebändern mit streifenförmiger Klebstoffbeschichtung wird beispielsweise in der WO 2013/024 150 A2 der Anmelderin beschrieben. Dabei wird typischerweise so vorgegangen, dass zunächst die Trägerbahn aus dem textilen Material von der Vorratseinheit abgewickelt und dann der Beschichtungseinheit zugeführt wird. Mit Hilfe der Beschichtungseinheit werden auf der Trägerbahn in ihrer Längserstreckung ein oder mehrere Klebstoffstreifen durch Beschichten mit einem Kleber erzeugt. Abschließend wird die Trägerbahn in Längsrichtung in die einzelnen Klebebänder geschnitten.

Im nächstkommenden Stand der Technik nach der EP 1 300 452 A2 geht es um ein Verfahren zur Ummantelung von langgestrecktem Gut wie insbesondere Kabelsätzen. Zu diesem Zweck ist eine Eindeckung vorgesehen und das Klebeband erstreckt sich über eine der Längskanten der Eindeckung. Die textile Eindeckung und das Klebeband weisen im Wesentlichen rechtwinklig zur Laufrichtung ein oder mehrere Schwächungslinien auf, so dass die Ummantelung leichter handeinreißbar ist.

Die Schwächungslinien sind in Form von Perforationen ausgestaltet. Dabei können die Schwächungslinien mithilfe von gesteuert intermittierend arbeitenden Schneidtechnologien eingebracht werden. Beispielsweise wird die Verwendung von Lasern, Ultraschall oder Hochdruckwasserstrahlen beschrieben.

Bei dem Schneidvorgang, der beispielsweise mithilfe von Rollenmessern vorgenommen werden kann oder auch nachträglich, kann es zu sogenannten Ausfransungen an den betreffenden Längsrändern bzw. Querrändern und damit an den Schnittkanten kommen. Derartige Ausfransungen oder auch ein Fadenausriss bei bandförmigen textilen Trägern, die beispielsweise aus Vlies oder einem Gewebe hergestellt sind, werden manchmal erst bei der Verarbeitung, d. h. beim Ummanteln von langgestrecktem Gut, beobachtet. Hieraus können Probleme bei der Herstellung beispielsweise einer Schlauchummantelung mithilfe des fraglichen Klebebandes resultieren oder die Verarbeitung wird schlicht und ergreifend erschwert.

Zwar arbeitet der angesprochene Stand der Technik typischerweise mit Rollenmessern, die für einen sauberen Schnitt an den Schnittkanten sorgen. Außerdem stellt die Klebstoffbeschichtung oftmals sicher, dass es zu den beschriebenen Ausfransungen nicht kommt, zumindest dann nicht, wenn die Klebstoffbeschichtung bis an den fraglichen Längsrand bzw. Querrand reicht. Da in der Praxis jedoch zunehmend mit streifenförmigen Klebstoffbeschichtungen gearbeitet wird, die nicht die gesamte Seite des Trägers erfassen, sind Längsränder oftmals von der Klebstoffbeschichtung frei. Dadurch können die beschriebenen Ausfransungen an den betreffenden Längsrändern auftreten. Vergleichbare Ausfransungen werden manchmal auch bei Perforationen beobachtet. Hierfür hat der Stand der Technik bisher keine überzeugenden Lösungen zur Verfügung gestellt.

Aus diesem Grund liegt der Erfindung das technische Problem zugrunde, eine derartige Vorrichtung zur Herstellung eines Klebebandes so weiter zu entwickeln, dass einwandfreie Perforationen beobachtet werden. Insbesondere sollen die in der Praxis oftmals auftretenden Ausfransungen bei bandförmigen textilen Trägern aus überwiegend Kunststofffasern nicht mehr beobachtet werden.

Zur Lösung dieser technischen Problemstellung ist eine gattungsgemäße Vorrichtung zur Herstellung eines Klebebandes im Rahmen der Erfindung dadurch gekennzeichnet, dass zusätzlich eine gegenüber dem durchlaufenden Träger verstellbar ausgebildete Ultraschalleinheit (Lasereinheit) zur Herstellung von Perforationen in Gestalt von Querperforationen im Träger realisiert ist, wobei sich die Ultraschalleinheit (Lasereinheit) in der Durchlaufrichtung und/oder quer zur Durchlaufrichtung verstellen lässt, und wobei die Verstellung zusätzlich senkrecht zur Durchlaufrichtung des Trägers erfolgt und dadurch die Möglichkeit besteht, die Ultraschalleinheit (Lasereinheit) wahlweise an den Träger anzustellen und vom Träger wieder zu entfernen.

Die Ultraschalleinheit arbeitet typischerweise mit einem Schallmesser und einem gegenüberliegenden Amboss. Zwischen dem Schallmesser und dem Amboss wird der Träger hindurchgeführt. Der Amboss vollführt regelmäßig Schwingungen oberhalb von 20 kHz. Grundsätzlich kann auch das Schallmesser solche Schwingungen vollführen. Ebenso ist es denkbar, dass sowohl der Amboss als auch das Schallmesser zu den nachfolgend noch im Detail angesprochenen Schwingungen angeregt werden.

Die im Rahmen der Erfindung verfolgte bevorzugte Variante mit dem zu Schwingungen angeregten Amboss bzw. Schallamboss ist mit dem Vorteil ausgerüstet, dass in diesem Fall mehrere entsprechend ausgelegte Ultraschalleinheiten nebeneinander angeordnet werden können und hierbei mit einem einzigen Amboss bzw. Schallamboss gearbeitet wird. D. h., in diesem Fall reicht es aus, wenn der übereinstimmende Amboss bzw. Schallamboss zu Schwingungen angeregt wird. Demgegenüber vollführen die jeweils gegenüberliegenden Schallmesser im Regelfall keine Schwingungen. Dadurch ist der vorrichtungsmäßige Aufwand verringert, weil für den durchgängigen Amboss bzw. Schallamboss lediglich eine Erregereinheit benötigt wird.

Zur Erzeugung der Schwingungen im Schallmesser und optional im Amboss wird meistens mit dem sogenannten inversen piezoelektrischen Effekt, der Elektrostriktion, gearbeitet. D.h., die Ultraschalleinheit ist in diesem Fall mit einem Hochfrequenzgenerator ausgerüstet, dessen ausgangsseitig erzeugte Wechselspannung an eine Keramik- oder Quarzkristallplatte angeschlossen ist. Als Folge hiervon führt die Keramik- oder Quarzkristallplatte die Schwingungen in entsprechender Frequenz aus.

Sofern die fragliche Quarzkristallplatte oder Keramikplatte das Schallmesser definiert bzw. mit dem Schallmesser gekoppelt ist, lässt sich auch das Schallmesser in entsprechende Schwingungen versetzen. Da die Amplitude der Schwingungen im Regelfall im Mikrometerbereich liegt, sind meisten Sonotroden als Schallmesser erforderlich, mit deren Hilfe größere Amplituden erzeugt werden. Die fraglichen Schwingungen liegen dabei typischerweise als mechanische Longitudinalwellen vor, die am freien Ende der Sonotrode reflektiert werden. Die Länge der Sonotrode wird dann so festgelegt, dass sie ein Vielfaches der halben Wellenlänge der Schwingung beträgt, so dass sich insgesamt eine stehende Welle innerhalb der Sonotrode und folglich dem Schallmesser einstellt.

Jedenfalls ist die eingesetzte Ultraschalleinheit mit dem Schallmesser und dem gegenüberliegenden Amboss in der Lage, mit gegenüber einem herkömmlichen Schnittmesser verringerten Schnittkräften die fragliche textile Trägerbahn in beispielsweise einer Längsrichtung zu schneiden. Selbstverständlich kann mit Hilfe der Ultraschalleinheit der bandförmige textile Träger auch in Querrichtung geschnitten werden. Darüber hinaus lässt sich die Ultraschalleinheit erfindungsgemäß so einsetzen, dass mit ihrer Hilfe kleine Schnitte mit Unterbrechungen ausgeführt werden, folglich die gewünschten Perforationen in den Träger eingebracht werden.

Bei diesen sämtlichen Fällen wird im Regelfall zugleich die Schnittkante bzw. Perforation verschweißt. Dabei treten durchweg weder verbrannte Kanten noch Verbrennungsgase auf. Gegenüber einem prinzipiell auch möglichen, allerdings nicht beanspruchten, Wasserstrahlschneiden ist der erfindungsgemäße Einsatz der Ultraschalleinheit oder der Lasereinheit generell mit dem Vorteil verbunden, dass in beiden Fällen eine Durchfeuchtung der Trägerbahn bzw. des daraus hergestellten Trägers ausgeschlossen wird. D.h., aufwendige Trocknungsmethoden sind entbehrlich. Hinzu kommt, dass sowohl Ultraschall(schneid)einheiten als auch Lasereinheiten heutzutage besonders einfach und kostengünstig realisiert werden können.

Bei der eingesetzten Laser(strahl)einheit handelt es sich im Regelfall um einen Infrarotlaser, der im Allgemeinen im Pulsbetrieb arbeitet. Der von dem fraglichen Laser ausgehende Laserstrahl kann mit beweglichen Spiegelelementen abgelenkt und über die Trägerbahn geführt werden. Außerdem ist meistens eine Optik zur Fokussierung vorgesehen. Dadurch kann der bandförmige textile Träger mit den gewünschten Schnittkanten in Längsrichtung bzw. Querrichtung ebenso wie mit den Perforationen wahlweise ausgerüstet werden. Zugleich sorgt der an dieser Stelle vorteilhaft eingesetzte Infrarotlaser im Regelfall dafür, dass die Schnittkanten bzw. die Perforationen die gewünschte zusätzliche Verschweißung erfahren. Auf die Perforationen übertragen meint dies, dass die üblicherweise als kurze Schnitte realisierten Perforationen an ihren Perforationskanten praktisch keine oder nur geringfügige Ausfransungen aufweisen. Bei dem eingesetzten Infrarotlaser handelt es sich im Allgemeinen um einen CO₂-Laser. Grundsätzlich kann aber auch ein Nd:YAG-Laser eingesetzt werden. Die Intensität bzw. Bestrahlungsdauer lässt sich dabei so einstellen bzw. tackten, dass verbrannte Kanten insgesamt nicht beobachtet werden.

Erfindungsgemäß sind die Ultraschalleinheit oder die Lasereinheit gegenüber dem durchlaufenden Träger verstellbar ausgebildet. Die Verstellung erfolgt dabei senkrecht zur Durchlaufrichtung des Trägers. Dadurch besteht die Möglichkeit, die Ultraschalleinheit oder die Lasereinheit wahlweise an den Träger anzustellen und vom Träger wieder zu entfernen. Darüber hinaus lassen sich die Ultraschalleinheit oder die Lasereinheit aber auch in der Durchlaufrichtung und/oder quer zur Durchlaufrichtung verstellen. Eine Verstellmöglichkeit quer zur Durchlaufrichtung des Trägers eröffnet beispielsweise die Möglichkeit, den Träger in Querrichtung mit Hilfe der Ultraschalleinheit oder Lasereinheit in Querrichtung zu schneiden. In gleicher Richtung können auf diese Weise auch entsprechende Perforationen eingebracht werden.

Darüber hinaus hat es sich als günstig erwiesen, wenn die Ultraschalleinheit oder die Lasereinheit vor der Beschichtungseinheit in Durchlaufrichtung des Trägers angeordnet ist. D.h., der bandförmige textile Träger wird zunächst geschnitten und/oder perforiert und erst im Anschluss daran mit dem Klebstoff in der Beschichtungseinheit beschichtet. Eine solche Vorgehensweise ist besonders dann günstig, wenn die Klebstoffbeschichtung lediglich streifenförmig auf eine entsprechende Beschichtungsseite des Trägers aufgebracht wird und beispielsweise nicht vollflächig. Denn dann bleiben die Schnittkanten bzw. Perforationen überwiegend frei vom Klebstoff.

Wird der Klebstoff auf die Beschichtungsseite vollflächig aufgebracht, kann auch so vorgegangen werden, dass die Ultraschalleinheit oder die Lasereinheit nach der Beschichtungseinheit in Durchlaufrichtung des Trägers platziert wird. Diese Vorgehensweise lässt sich selbstverständlich auch dann realisieren, wenn die Beschichtungseinheit lediglich für eine Streifenbeschichtung mit dem Klebstoff an der Beschichtungsseite des Trägers sorgt.

Die Ultraschalleinheit oder die Lasereinheit können mit einer zusätzlichen Kantenschweißeinheit ausgerüstet werden. Diese Kantenschweißeinheit sorgt für eine zusätzliche Verschweißung der Schnittkante und/oder der Perforation bzw. der Perforationskanten. Im Allgemeinen ist eine solche Kantenschweißeinheit jedoch entbehrlich, weil sowohl die Ultraschalleinheit als auch die Lasereinheit automatisch beim Schneid- bzw. Perforationsvorgang für eine zusätzliche Verschweißung der Schnittkante respektive der Perforationskanten sorgen. Insofern arbeiten sowohl die Ultraschalleinheit als auch die Lasereinheit im Sinne eines kombinierten Schweiß-/Trennverfahrens bzw. als kombinierte Schweiß-/Trenneinheit.

Dieses kombinierte Schweiß-/Trennverfahren arbeitet überwiegend berührungslos. Denn weder die Lasereinheit noch die Ultraschalleinheit üben Druck auf den Träger aus. Sofern der bandförmige textile Träger bzw. eine Trägerbahn zu seiner Herstellung über die zuvor aufgebrachte streifenförmige Klebstoffbeschichtung verfügt, ist im Anschluss an das beschriebene und kombinierte Schweiß-/Trennverfahren das gewünschte Klebeband bereits fertig konfektioniert und steht für die unmittelbare weitere Verarbeitung zur Verfügung.

Der bandförmige textile Träger zur Herstellung des Klebebandes wird im Regelfall aus der Trägerbahn produziert. Die Trägerbahn befindet sich auf der Vorratseinheit. Zur Herstellung des Trägers wird die Trägerbahn meistens in Längsrichtung in die einzelnen Klebebänder geschnitten. Bei den solchermaßen erzeugten Schnittkanten handelt es sich folglich um Längsschnittkanten, d. h., Längsräder des auf diese Weise hergestellten bandförmigen textilen Trägers. Durch den Einsatz der Ultraschalleinheit oder Lasereinheit ist die fragliche Schnittkante zugleich verschweißt. Dadurch werden etwaige Ausfransungen bzw. ein Fadenausriss zuverlässig vermieden.

Bei dem im Rahmen der Erfindung eingesetzten bandförmigen textilen Träger handelt es sich um einen solchen, welcher aus einem textilen Basismaterial hergestellt worden ist. Bei dem angesprochenen textilen Basismaterial handelt es sich um ein Bahnmaterial, welches gewebt, gewirkt, geflochten oder sonst wie zusammengefügt worden ist. Hierzu gehören auch Vliese oder Vliesstoffe. D.h., die Erfindung umfasst beispielsweise als Gewebe ausgebildete textile Träger ebenso wie solche aus einem Vliesstoff. Darüber hinaus können auch textile Träger aus einer Maschenware, einem Geflecht, einem Nähgewirke etc. zum Einsatz kommen. Ebenso sind textile Träger denkbar, die beispielsweise aus Kombinationen hergestellt worden sind, beispielsweise aus einem Gewebe und zusätzlich einem Vliesstoff als Laminat.

Darüber hinaus kann der bandförmige textile Träger neben der Klebstoffbeschichtung mit zusätzlichen Beschichtungen ausgerüstet werden. Als Klebstoffbeschichtung hat es sich besonders bewährt, wenn ein Hotmelt-Kleber bzw. Acrylatkleber aufgebracht wird. Denn dieser kann problemlos mit wenigstens einer Düse auf den bandförmigen textilen Träger aufgetragen werden. Außerdem lässt sich ein solcher Hotmelt-Kleber besonders einfach und günstig in Streifenform auf den betreffenden Träger aufbringen.

Bei den zusätzlich möglichen Beschichtungen handelt es sich beispielsweise um eine Lackbeschichtung, eine Schaumstoffbeschichtung, eine Folienbeschichtung etc.. Der fragliche textile Träger ist darüber hinaus und überwiegend aus Kunststofffasern aufgebaut bzw. hergestellt. Grundsätzlich können aber auch Naturfasern, wie beispielsweise Baumwollfasern, mit verarbeitet werden. In diesem Fall ist jedoch dafür Sorge zu tragen, dass der gewichtsmäßige Anteil an Kunststofffasern überwiegt.

Denn erfindungsgemäß wird so vorgegangen, dass der fragliche textile Träger zumindest im Bereich der jeweiligen Schnittkante bzw. im Bereich der Perforation die angesprochene zusätzliche Verschweißung erfährt. Hierbei werden in diesem Zusammenhang die im textilen Träger vorhandenen Kunststofffasern auf- oder angeschmolzen. Auf diese Weise wird eine mehr oder minder glatte Schnittkante bzw. eine glatte Perforationskante erzeugt. Dadurch besteht nicht die Gefahr von Fadenausriss oder Ausfransungen. Das An- oder Aufschweißen der fraglichen Kunststofffasern lässt sich besonders einfach realisieren, weil die für die Herstellung des textilen Trägers eingesetzten Kunststoffe typischerweise mit Schmelztemperaturen im Bereich von ca. 100°C bis maximal 300°C und vorzugsweise mit Schmelztemperaturen im Bereich von 80°C bis 200°C ausgerüstet sind.

Durch den Rückgriff auf die Lasereinheit oder die Ultraschalleinheit wird insgesamt mit Hilfe der beschriebenen Vorrichtung ein Klebeband zur Verfügung gestellt, welches mit wenigstens einer Schnittkante bzw. Perforation oder Perforationskante ausgerüstet ist, die zusätzlich verschweißt sind. Hierbei geht die Erfindung von der Erkenntnis aus, dass beim Ultraschallschneiden zwangsläufig Temperaturen erzeugt werden, die zumindest im Bereich der Schnittkante bzw. Perforationskante die Schmelztemperatur der eingesetzten Kunststofffasern des bandförmigen textilen Trägers übersteigen. Dadurch kommt es zu der gewünschten zusätzlichen Verschweißung der Schnittkante. Vergleichbares gilt für die Lasereinheit.

Auf diese Weise lassen sich die Schnittkanten ohne Ausfransungen sowohl in Längs- als auch in Querrichtung definieren. Vergleichbares gilt für in den Träger eingebrachte Perforationen. In diesem Fall sind die beim Einbringen der Perforation zwangsläufig entstehenden Perforationskanten zusätzlich verschweißt. Auch in diesem Fall macht sich die Erfindung zunutze, dass beim Einbringen solcher Perforationen mit Hilfe der Ultraschalleinheit (Lasereinheit) nicht nur kleine Schnitte in Längs- oder Querrichtung im Träger erzeugt werden, sondern die diese Perforationsschnitte oder Perforationseinschnitte begrenzenden Perforationskanten mit Hilfe der Ultraschalleinheit (Lasereinheit) zugleich verschweißt werden.

Dadurch werden wiederum Ausfransungen in diesem Bereich vermieden, so dass das auf diese Weise hergestellte Klebeband unschwer beispielsweise entlang der Perforationen bzw. Perforationsschnitte eingerissen werden kann. Beispielsweise hat es sich in diesem Zusammenhang bewährt, die fraglichen Perforationen bzw. Perforationsschnitte in regelmäßigen Abständen quer zur Längserstreckung in den jeweiligen Träger einzubringen. Dadurch kann das auf diese Weise realisierte Klebeband problemlos quer eingerissen werden, und zwar von Hand. Das gilt selbst für Klebebänder mit Trägern bzw. aus Trägermaterialien, die ansonsten nicht handeinreißbar wären.

Tatsächlich korrespondiert die beobachtete Handeinreißbarkeit im Regelfall dazu, dass Querreißkräfte von 10 N/cm oder weniger beobachtet werden. Diese Querreißkräfte lassen sich erfindungsgemäß auch bei Trägern einstellen, die (ohne Perforationen) nicht handeinreißbar sind. Das erreicht die Erfindung durch die zusätzlich eingebrachten Perforationen bzw. Perforationsschnitte in der jeweiligen Querrichtung des Trägers. Sofern die Perforationen jeweils durchgängig in Querrichtung des Trägers und in jeweils geringem Abstand zueinander in den Träger eingebracht werden, stehen eine Vielzahl möglicher Quereinreißlinien in dem solchermaßen konfektionierten Klebeband anschließend zur Verfügung. Gleiche Vorteile und Wirkungen werden für den Fall beobachtet, dass alternativ oder zusätzlich zu der Ultraschalleinheit die Lasereinheit zum Einsatz kommt. Hierin sind die wesentlichen Vorteile zu sehen.

Im Folgenden wird die Erfindung anhand einer lediglich ein Ausführungsbeispiel darstellenden Zeichnung näher erläutert; es zeigen:
Fig. 1 eine erfindungsgemäße Vorrichtung zur Herstellung eines Klebebandes,
Fig. 2 die Ultraschalleinheit in einer Detailwiedergabe und
Fig. 3 das mithilfe der Vorrichtung nach den Fig. 1 und 2 hergestellte Klebeband in einer Aufsicht.

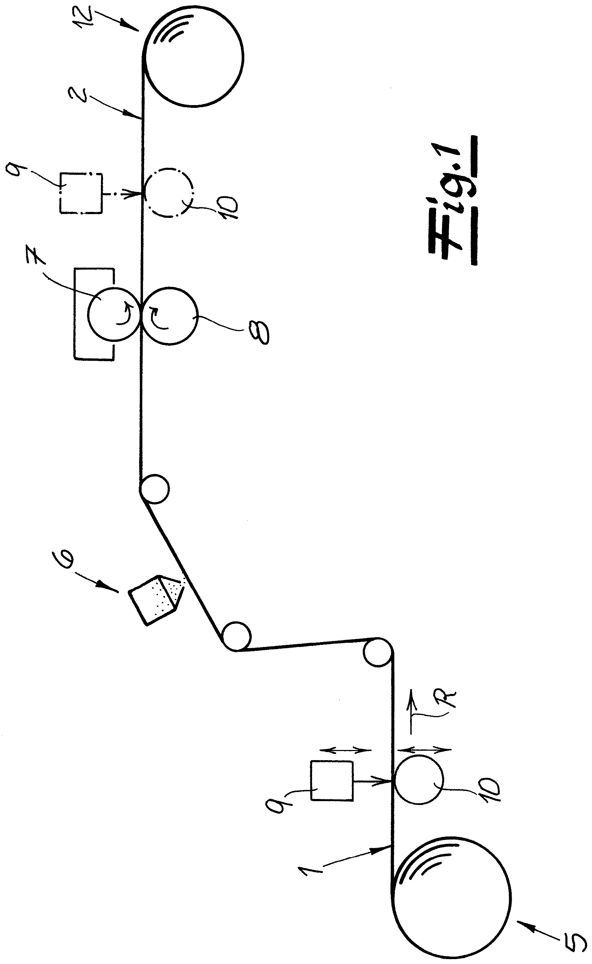

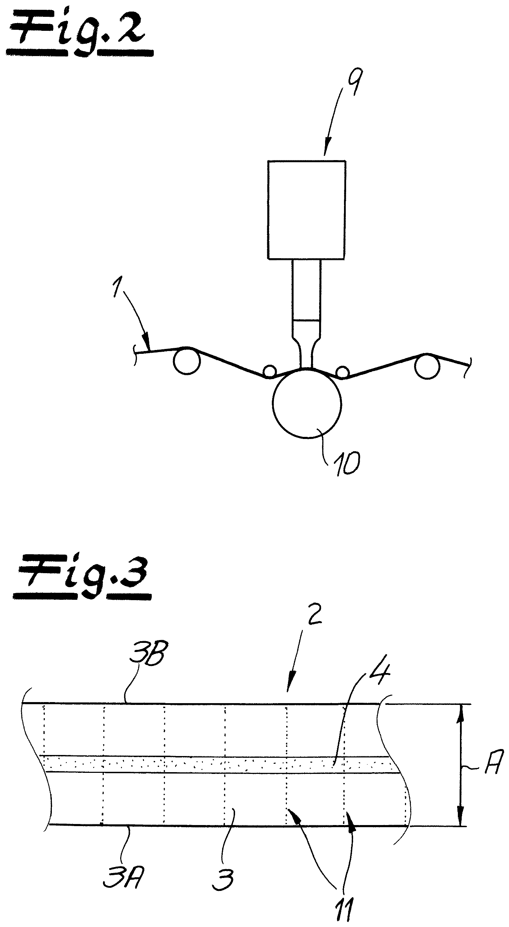

In den Fig. 1 und 2 ist eine Vorrichtung dargestellt, mit deren Hilfe aus einer Trägerbahn 1 ausgangsseitig eine oder mehrere Klebebänder 2 hergestellt werden. Bei dem Klebeband 2 handelt es sich um ein solches, wie es prinzipiell in der Aufsicht nach der Fig. 3 dargestellt ist. Die Trägerbahn 1 liegt als flächige textile Bahn vor und kann in ihrer Längsrichtung in mehrere der Klebebänder 2 geschnitten werden, wie dies nachfolgend im Detail erläutert wird. Die Trägerbahn 1 wird zu diesem Zweck zur Definition der einzelnen Klebebänder 2 mit dem zugehörigen Träger 3 in der Längsrichtung geschnitten.

Das Klebeband 2 verfügt in seinem grundsätzlichen Aufbau über den bereits angesprochenen Träger 3 und wenigstens einen auf den Träger 3 aufgebrachten Klebstoffstreifen 4 bzw. eine streifenförmige Klebstoffbeschichtung 4.

Die Klebstoffbeschichtung 4 ist auf zumindest einer Seite des Trägers 3 aufgebracht. Im Rahmen des Ausführungsbeispiels nach der Fig. 3 ist der Klebstoffstreifen 4 lediglich auf einer Oberseite des Trägers 3 als Beschichtungsseite vorgesehen. Grundsätzlich kann auch ein zusätzlicher Klebstoffstreifen 4 auf der Unterseite oder auf beiden Seiten realisiert werden. Daneben liegt es im Rahmen der Erfindung, nicht mit einem Klebstoffstreifen 4 zu arbeiten, der nur einen Teil, beispielsweise bis zu 50 % der Beschichtungsseite des Trägers 3 bedeckt. Sondern es kann auch so vorgegangen werden, dass die fragliche Beschichtungsseite des Trägers 3 vollflächig mit dem Klebstoffstreifen 4 ausgerüstet ist.

Bei dem Träger 3 und folglich der den Träger 3 definierenden Trägerbahn 1 handelt es sich um einen bandförmigen textilen Träger 3. Der bandförmige textile Träger 3 kann aus einem Gewebe oder Vlies hergestellt sein. Dabei kommen überwiegend Kunststofffasern als Material für den Träger 3 zum Einsatz. Grundsätzlich kann auch ein Träger 3 aus einem Laminat bestehend aus einem Gewebe und einem Vlies zum Einsatz kommen. Das Flächengewicht des Trägers 3 liegt vorliegend im Bereich zwischen 100 g/m² bis 300 g/m². Grundsätzlich sind auch noch größere Flächengewichte denkbar.

Bei dem Klebstoffstreifen 4 handelt es sich um einen solchen, der mithilfe eines so genannten Hotmelt-Klebers bzw. Schmelzklebers auf Acrylatbasis auf die Beschichtungsseite des Trägers 3 aufgebracht wird. Dazu ist eine nachfolgend noch näher beschriebene Beschichtungseinheit 6 vorgesehen. Die Beschichtungseinheit 6 mag mit einer Maske oder einer entsprechend geformten Düse ausgerüstet sein, um auf der Beschichtungsseite des Trägers 3 den in der Fig. 3 dargestellten Klebstoffstreifen 4 zu definieren.

Mithilfe der Vorrichtung gemäß der Fig. 1 wird die Trägerbahn 1 ausgehend von einer Vorratseinheit 5 zugeführt. Im dargestellten Beispielfall nach der Fig. 1 wird die Trägerbahn 1 in der betreffenden Vorrichtung mithilfe einer Ultraschalleinheit 9, 10 zunächst perforiert, anschließend beschichtet und dann in die einzelnen Klebebänder 2 geschnitten. Die Perforation mithilfe der dargestellten Ultraschalleinheit 9, 10 kann auch im Anschluss an das Schneiden erfolgen. Beide grundsätzlichen Positionen der Ultraschalleinheit 9, 10 sind in der Fig. 1 dargestellt. Im Regelfall wird so vorgegangen, dass die Ultraschalleinheit 9, 10 zum Einbringen der Perforationen in die Trägerbahn 1 in der durch einen Pfeil in der Fig. 1 angedeuteten Durchlaufrichtung R der Trägerbahn 1 vor der Beschichtungseinheit 6 bzw. der Düse angeordnet ist. Aus diesem Grund ist die Ultraschalleinheit 9, 10 an dieser Position durchgezogen dargestellt, wohingegen die weitere zweite optionale Position der Ultraschalleinheit 9, 10 nach dem Schneiden der Trägerbahn 1 in die Klebebänder 2 strichpunktiert dargestellt ist. In diesem Fall findet sich die Ultraschalleinheit 9, 10 in der Durchlaufrichtung R des Trägers 3 nach der Beschichtungseinheit 6.

Generell kann aber auch so vorgegangen werden, dass beispielsweise die Perforation und Beschichtung einerseits und das Schneiden der perforierten und beschichteten Trägerbahn 1 andererseits in voneinander getrennten Vorrichtungen erfolgen. Selbst eine zunächst vorgenommene Perforation einerseits und eine anschließende Beschichtung und das Schneiden in die Klebebänder 2 andererseits in getrennten Vorrichtungen wird von der Erfindung ausdrücklich mit abgedeckt.

Bei der Vorratseinheit 5 handelt es sich im Allgemeinen um eine Vorratswickelrolle, auf welche die Trägerbahn 1 aufgewickelt ist. Die Trägerbahn 1 ist als textile Flächenbahn ausgelegt, die vorliegend als Gewebebahn, Vliesstoffbahn etc. oder auch als eine kombinierte Laminatbahn aus Gewebe/Vlies ausgebildet ist oder sein kann. Darüber hinaus liegt es im Rahmen der Erfindung, die Trägerbahn 1 zusätzlich zu dem Klebstoffstreifen 4 mit einer weiteren Beschichtung, einer Lackbeschichtung, einer Folienbeschichtung etc. auszurüsten. Das ist jedoch im Detail nicht dargestellt.

Die Trägerbahn 1 verfügt insgesamt über eine Breite, welche ein mehrfaches der in der Fig. 3 dargestellten Gesamtbreite A des Klebebandes 2 beträgt oder betragen kann. Tatsächlich kann die Trägerbahn 1 beispielsweise eine Breite von 3A bis 20A mit A der Breite des Klebebandes 2 betragen.

Ausgehend von der Vorratseinheit 5 wird die Trägerbahn 1 zunächst der Ultraschalleinheit 8, 9 zugeführt. Mithilfe der Ultraschalleinheit 8, 9 werden im Ausführungsbeispiel Perforationen in die Trägerbahn 1 eingebracht. Bei diesen Perforationen handelt es sich im Ausführungsbeispiel und nicht einschränkend um Querperforationen. Diese Querperforationen erkennt man in der Fig. 3 in der Aufsicht auf das Klebeband 2 durch jeweils Querperforationslinien 11. Mithilfe dieser Querperforationslinien 11 bzw. der Querperforationen besteht die Möglichkeit, ein ansonsten nicht handeinreißbares Klebeband 2 handeinreißbar auszulegen, was im Rahmen der Erfindung dazu korrespondiert, dass für das Quereinreißen des Klebebandes 2 insgesamt Querreißkräfte von nicht mehr als 10N/cm erforderlich sind.

Mithilfe der Ultraschalleinheit 9, 10 werden nun diese Querperforationen bzw. die entsprechenden Querperforationslinien 11 in regelmäßigem Abstand quer zur Durchlaufrichtung R des Trägers 3 bzw. der Trägerbahn 1 in diese eingebracht. Dazu kann mit mehreren quer zum Träger 3 bzw. der Trägerbahn 1 angeordneten Ultraschalleinheiten 9, 10 gearbeitet werden. Es ist aber auch möglich, auf eine (einzige) Ultraschalleinheit 9, 10 zurückzugreifen, die zum Einbringen der Querperforationen quer zur Durchlaufrichtung R des Trägers 3 bzw. der Trägerbahn 1 verfahren wird. D. h., die Ultraschalleinheit 9, 10 ist gegenüber dem Träger 3 verstellbar ausgelegt, wie entsprechende Pfeile in der Fig. 1 andeuten. Dabei ist nicht nur eine Verstellung senkrecht zum Träger 3 möglich, sondern auch quer zum Träger, also insgesamt eine dreidimensionale Verstellung. Die Ultraschalleinheit 9, 10 setzt sich aus einem Messer bzw. Schallmesser 9 und einem gegenüberliegenden Amboss 10 zusammen. Meistens handelt es sich bei dem Amboss 10 um einen Schallamboss, d. h. der Amboss 10 wird in Schwingungen versetzt. Zwischen dem Schallmesser 9 und dem Amboss bzw. Schallamboss 10 wird der Träger 3 bzw. die Trägerbahn 1 hindurchgeführt.

Da das Schallmesser 9 bzw. der Amboss respektive Schallamboss 10 typischerweise zu Schwingungen mit einer Frequenz oberhalb von 20 kHz angeregt wird, sind entsprechende Frequenzen einerseits nicht hörbar und andererseits so ausgelegt, dass es zu einer minimalen Oberflächenreibung zwischen dem fraglichen Schallmesser 9 und der Trägerbahn 1 bzw. dem Träger 3 kommt. Aufgrund dieser minimalen Oberflächenreibung wird die Trägerbahn 1 aufgetrennt bzw. eingeschnitten. Es entsteht ein Perforationsschnitt. Durch eine Bewegung der Ultraschalleinheit 9, 10 quer zur Durchlaufrichtung R lassen sich mehrere dieser Perforationsschnitte in regelmäßigen Abständen im Träger 3 bzw. der Trägerbahn 1 definieren, so dass auf diese Weise die in der Fig. 3 dargestellten Querperforationen bzw. mehrere dieser Querperforationslinien 11 entstehen.

Dadurch, dass das Schallmesser 9 die bereits angesprochenen Schwingungen im Ultraschallbereich vollführt, kommt es zugleich zu einer Erwärmung der Trägerbahn 1 bzw. des Trägers 3 im Kontaktbereich zwischen dem Schallmesser 9 und dem fraglichen textilen Material. Da die Trägerbahn 1 und folglich der Träger 3 überwiegend aus Kunststofffasern aufgebaut ist, werden bei den durch die Oberflächenreibung erzeugten Temperaturen die fraglichen Kunststofffasern zumindest im Bereich von die Perforationen bzw. Perforationsschnitte jeweils umgebenden Perforationskanten aufgeschmolzen. Hierbei geht die Erfindung von der Erkenntnis aus, dass die beim Einbringen der Perforationen bzw. bei den einzelnen Perforationsschnitten durch die Schwingung des Schallmessers 9 zur Verfügung stehende akustische Energie ausreicht, um die jeweilige Perforationskante im Bereich der einzelnen Perforationsschnitte zu erwärmen und auf diese Weise für die gewünschte Verschweißung an der betreffenden Perforationskante zu sorgen.

In gleicher Weise kann die Ultraschalleinheit 9, 10 auch alternativ oder zusätzlich eingesetzt werden, um die einzelnen Klebebänder 2 durch Längsschneiden der beschichteten Trägerbahn 1 zu erzeugen. In diesem Fall ersetzt die Ultraschalleinheit 9, 10 eine im Rahmen der Fig. 1 dargestellte Schneidvorrichtung 7, 8, die sich vorliegend aus einem rotierenden Messer 7 und einem zugehörigen gegenüberliegenden Amboss 8 zusammensetzt. Im Regelfall sind mehrere dieser rotierende Messer 7 und zugehörige Ambosse 8 vorgesehen, nämlich in regelmäßigem Abstand zueinander, welcher im Ausführungsbeispiel der Breite A des Klebebandes 2 nach dem Schnitt entspricht. Sofern an dieser Stelle die Ultraschalleinheit 9, 10 zum Einsatz kommt, werden hiermit jeweils Längsschnitte erzeugt und durch die beschriebene Oberflächenreibung die jeweiligen Schnittkanten am zugehörigen Längsrand 3A, 3B des Klebebandes 2 erwärmt. Wie bereits mit Bezug zu den Perforationsschnitten und den hergestellten Querperforationslinien 11 erläutert, kommt es bei einem Schnitt mithilfe der Ultraschalleinheit 9, 10 in gleicher Weise dazu, dass die fraglichen Schnittkanten an den Längsrändern 3A, 3B verschweißt werden.

Wie zuvor bereits erläutert, vollführt das Schallmesser 9 der Ultraschalleinheit 9, 10 Ultraschallschwingungen. Alternativ oder zusätzlich kann auch der gegenüberliegende Amboss bzw. Schallamboss 10 zu Ultraschallschwingungen angeregt werden. In diesem Fall wird der fragliche Schallamboss 10 ebenfalls in Ultraschallschwingungen je jenseits der Hörgrenze versetzt. Dann kann sogar auf das Schwingen des Schallmessers 9 verzichtet werden. Selbstverständlich umfasst die Erfindung auch Varianten dergestalt, dass sowohl das Schallmesser 9 als auch der Schallamboss 10 jeweils Ultraschallschwingungen vollführen.

Da die Trägerbahn 1 überwiegend aus Kunststofffasern aufgebaut ist, das heißt, die Kunststofffasern in der Trägerbahn 1 mehr als 50 Gew.-% betragen, sorgt die mithilfe der Ultraschalleinheit 9, 10 an der jeweiligen Schnittkante bzw. Perforationskante erzeugte Erwärmung jeweils dafür, dass einzelne Kunststofffasern zumindest anschmelzen. Auf diese Weise kommt es im Bereich der Schnittkante am jeweiligen Längsrand 3A, 3B des Trägers 3 respektive an der Perforationskante zu einer Versiegelung des betreffenden Trägers 3. Dadurch wird verhindert, dass die jeweilige Schnittkante bzw. Perforationskante ausfransen kann. Das erleichtert die anschließende Verarbeitung und Herstellung des Klebebandes 2.

Nach der Ultraschalleinheit 9, 10 und den eingebrachten Querperforationen wird die perforierte Trägerbahn 1 über eine oder mehrere Umlenkrollen geführt, bis sie die bereits zuvor angesprochene Beschichtungseinheit 6 erreicht und diese passiert. Im Ausführungsbeispiel handelt es sich bei der Beschichtungseinheit 6 um lediglich eine Düse, mit deren Hilfe der in der Fig. 3 dargestellte eine Klebstoffstreifen 4 auf die Beschichtungsseite des Trägers 3 respektive die Trägerbahn 1 aufgebracht wird. Selbstverständlich können auch mehr als eine Düse bei der Beschichtungseinheit 6 realisiert sein.

Anhand der Darstellung in der Fig. 1 erkennt man, dass sich die jeweilige Beschichtungseinheit 6 bzw. Düse quer im Vergleich zur Durchlaufrichtung R und Längserstreckung der Trägerbahn 1 erstreckt. Außerdem wird die Trägerbahn 1 im Bereich der Beschichtungseinheit 6 bzw. Düse vertikal oder nahezu vertikal geführt. Das gilt selbstverständlich nur beispielhaft und nicht zwingend. Durch die schräge bzw. vertikale Führung der Trägerbahn 1 im Bereich der Beschichtungseinheit 6 gelingt eine besonders exakte Herstellung des Klebstoffstreifens 4. Denn hierbei macht sich die Erfindung zusätzlich Gravitationskräfte des die Düse im Regelfall verlassenden Schmelzklebers zunutze. Das heißt, der fragliche Schmelzkleber kann mit einer exakt definierten Kante und letztlich ohne seitliche Ausfransungen auf die Beschichtungsseite des Trägers 3 bzw. an dieser Stelle auf die Trägerbahn 1 aufgebracht werden.

In jedem Fall passiert die Trägerbahn 1 die fragliche Beschichtungseinheit 6 bzw. Düse, so dass der aus der Düse jeweils austretende Klebstoff den in der Fig. 3 dargestellten Klebstoffstreifen 4 oder mehrere dieser Klebstoffstreifen 4 auf der Trägerbahn 1 erzeugt.

Nachdem zu jedem nachträglich herzustellenden Klebeband 2 der Breite A der in der Fig. 3 dargestellte Klebstoffstreifen 4 auf die Beschichtungsseite des Trägers 3 bzw. die Trägerbahn 1 aufgebracht worden ist, passiert die Trägerbahn 1 mit den mehreren Klebstoffstreifen 4 entsprechend der Anzahl der nachträglich hieraus herzustellenden Klebebänder 2 die zuvor bereits angesprochene Schneideinrichtung 7, 8. Im Ausführungsbeispiel handelt es sich bei der Schneideinrichtung 7, 8 um einen Messerbalken, welcher in seiner Längserstreckung und quer zur durchlaufenden Trägerbahn 1 mehrere rotierende Messer 7 trägt. Die rotierenden Messer 7 weisen jeweils den Abstand A entsprechend der Breite A der hieraus nachträglich hergestellten Klebebänder 2 auf.

Mithilfe der rotierenden Messer 7 wird die Trägerbahn 1 in Längsrichtung bzw. in der Durchlaufrichtung R in die einzelnen Klebebänder 2 geschnitten. Dazu ist jedem rotierenden Messer 7 gegenüberliegend im Vergleich zur mittigen Trägerbahn 1 ein Amboss 8 zugeordnet. Der Amboss 8 mag dabei gegenläufig zum Messer 7 rotieren, wie entsprechende Pfeile in der Fig. 1 andeuten. Dadurch kann das rotierende Messer 7 in die Trägerbahn 1 eintauchen und erzeugt an den beiden Längsrändern 3A, 3B die Schnittkanten, welche beim Rückgriff auf die jeweiligen Messer 7 und Ambosse 8 ausfransen können. Wird jedoch anstelle der Schneideinrichtung 7, 8 die Ultraschalleinheit 9, 10 wie dargestellt eingesetzt, so werden die Längsränder 3A, 3B des bandförmigen Trägers 3 zusätzlich verschweißt. Das heißt, bei der Ultraschalleinheit 9, 10 anstelle der Schneidvorrichtung 7, 8 handelt es sich um eine kombinierte Schweiß-/Trenneinheit 7, 8.

Nachdem auf diese Weise die Trägerbahn 1 in Längsrichtung in die einzelnen Klebebänder 2 geschnitten worden ist, können die einzelnen Klebebänder 2 auf eine Vorratseinheit 12 aufgewickelt werden. Hierbei mag es sich um einen so genannten Wendewickler handeln, der vergleichbar aufgebaut ist und arbeitet, wie dies im Rahmen der WO 2013/024150 A2 der Anmelderin bereits beschrieben wurde.

In jedem Fall wird die Trägerbahn 1 mit hoher Geschwindigkeit hergestellt und mit glatten sowie sauberen Schnitten in Längsrichtung sowie Querperforationslinien 11 ausgerüstet. Dabei werden die betreffenden Schnittkanten und Perforationskanten zugleich verschweißt bzw. mit dem Ultraschall versiegelt respektive verschmolzen. Dadurch ist gewährleistet, dass die Schnittkanten bzw. Perforationskanten nicht ausfransen. Abgestimmt auf die Anwendung kann für das eingesetzte Schallmesser 9 mit entsprechenden Sonotroden vertikal, horizontal oder kontinuierlich geschnitten werden. Die gleichen Vorteile und Wirkungen werden beobachtet, wenn anstelle der Ultraschalleinheit 9, 10 eine Lasereinheit zum Einsatz kommt. Das ist jedoch nicht dargestellt.

Offenbart wird außerdem ein Verfahren zur Herstellung eines Klebebandes 2, insbesondere eines Wickelbandes zur Ummantelung von langgestrecktem Gut, vorzugsweise eines Wickelbandes zur Ummantelung von Kabelsätzen in Automobilen, wonach der bandförmige textile Träger 3 von einer Vorratseinheit 5 zugeführt und anschließend mithilfe einer Beschichtungseinheit 6 mit einer wenigstens streifenförmigen Klebstoffbeschichtung 4 auf zumindest einer Seite des Trägers 3 ausgerüstet wird, und wonach zusätzlich die Ultraschalleinheit 7, 8 oder die Lasereinheit zur Herstellung von Perforationen und/oder Schnittkanten im Träger 3 sorgt.

## Patentansprüche

1. Vorrichtung zur Herstellung eines Klebebandes (2), insbesondere eines Wickelbandes zur Ummantelung von langgestrecktem Gut, vorzugsweise eines Wickelbandes zur Ummantelung von Kabelsätzen in Automobilen, mit einer Vorratseinheit (5) zum Zuführen eines bandförmigen textilen Trägers (3) des Klebebandes (2) aus überwiegend Kunststofffasern, und mit einer Beschichtungseinheit (6) zum Aufbringen einer wenigstens streifenförmigen Klebstoffbeschichtung (4) auf zumindest einer Seite des Trägers (3), **dadurch gekennzeichnet, dass**
- zusätzlich eine gegenüber dem durchlaufenden Träger (3) verstellbar ausgebildete Ultraschalleinheit (9, 10) zur Herstellung von Perforationen in Gestalt von Querperforationen (11) im Träger (3) realisiert ist, wobei
- sich die Ultraschalleinheit (9, 10) in der Durchlaufrichtung (R) und/oder quer zur Durchlaufrichtung (R) verstellen lässt, und wobei
- die Verstellung zusätzlich senkrecht zur Durchlaufrichtung (R) des Trägers (3) erfolgt und dadurch die Möglichkeit besteht, die Ultraschalleinheit (9, 10) wahlweise an den Träger (3) anzustellen und vom Träger (3) wieder zu entfernen.

2. Vorrichtung zur Herstellung eines Klebebandes (2), insbesondere eines Wickelbandes zur Ummantelung von langgestrecktem Gut, vorzugsweise eines Wickelbandes zur Ummantelung von Kabelsätzen in Automobilen, mit einer Vorratseinheit (5) zum Zuführen eines bandförmigen textilen Trägers (3) des Klebebandes (2) aus überwiegend Kunststofffasern, und mit einer Beschichtungseinheit (6) zum Aufbringen einer wenigstens streifenförmigen Klebstoffbeschichtung (4) auf zumindest einer Seite des Trägers (3), **dadurch gekennzeichnet, dass**
- zusätzlich eine gegenüber dem durchlaufenden Träger (3) verstellbar ausgebildete Lasereinheit zur Herstellung von Perforationen in Gestalt von Querperforationen (11) im Träger (3) realisiert ist, wobei
- sich die Lasereinheit in der Durchlaufrichtung (R) und/oder quer zur Durchlaufrichtung (R) verstellen lässt, und wobei
- die Verstellung zusätzlich senkrecht zur Durchlaufrichtung (R) des Trägers (3) erfolgt und dadurch die Möglichkeit besteht, die Lasereinheit wahlweise an den Träger (3) anzustellen und vom Träger (3) wieder zu entfernen.

3. Vorrichtung nach Anspruch 1, **dadurch gekennzeichnet, dass** die Ultraschalleinheit (9, 10) mit einem Schallmesser (9) und einem gegenüberliegenden Amboss (10) ausgerüstet ist, zwischen denen der Träger (3) hindurchgeführt wird.

4. Vorrichtung nach Anspruch 1 oder 3, **dadurch gekennzeichnet, dass** zumindest der Amboss (10) Schwingungen oberhalb von 20 kHz vollführt.

5. Vorrichtung nach einem der Ansprüche 1 bis 4, **dadurch gekennzeichnet, dass** die Ultraschalleinheit (9, 10) oder die Lasereinheit vor oder nach der Beschichtungseinheit (6) in Durchlaufrichtung (R) des Trägers (3) angeordnet ist.

6. Vorrichtung nach einem der Ansprüche 1 bis 5, **dadurch gekennzeichnet, dass** die Ultraschalleinheit (9, 10) oder die Lasereinheit mit einer zusätzlichen Kantenschweißeinheit ausgerüstet ist.

7. Vorrichtung nach einem der Ansprüche 1 bis 6, **dadurch gekennzeichnet, dass** die Ultraschalleinheit (9, 10) oder die Lasereinheit als kombinierte Schweiß-/Trenneinheit ausgebildet ist.

## Claims

1. Apparatus for producing an adhesive tape (2), in particular a wrapping tape for wrapping elongated material, preferably a wrapping tape for wrapping cable harnesses in automobiles, with a supply unit (5) for feeding a ribbon-like textile carrier (3) of the adhesive tape (2) consisting mostly of plastic fibres, and with a coating unit (6) for applying an at least strip-like adhesive coating (4) to at least one side of the carrier (3), **characterized in that**
- an ultrasonic unit (9, 10) is also provided which is designed to be displaceable relative to the carrier (3) as it advances through in order to create perforations in the pattern of transverse perforations (11) in the carrier (3), wherein
- the ultrasonic unit (9, 10) can be displaced in the throughfeed direction (R) and/or transversely to the throughfeed direction (R), and wherein
- the displacement is also carried out perpendicularly to the throughfeed direction (R) of the carrier (3), which in turn provides the capability to optionally position the ultrasonic unit (9, 10) against the carrier (3) and to distance it from the carrier (3) again.

2. Apparatus for producing an adhesive tape (2), in particular a wrapping tape for wrapping elongated material, preferably a wrapping tape for wrapping cable harnesses in automobiles, with a supply unit (5) for feeding a ribbon-like textile carrier (3) of the adhesive tape (2) consisting mostly of plastic fibres, and with a coating unit (6) for applying an at least strip-like adhesive coating (4) to at least one side of the carrier (3), **characterized in that**
- a laser unit is also provided which is designed to be displaceable relative to the carrier (3) as it advances through in order to produce perforations in the pattern of transverse perforations (11) in the carrier (3), wherein
- the laser unit can be displaced in the throughfeed direction (R) and/or transversely to the throughfeed direction (R), and wherein
- the displacement is also carried out perpendicularly to the throughfeed direction (R) of the carrier (3), which in turn provides the capability to optionally position the laser unit against the carrier (3) and to distance it from the carrier (3) again.

3. Apparatus according to Claim 1, **characterized in that** the ultrasonic unit (9, 10) is equipped with a sound level meter (9) and an anvil (10) positioned oppositely thereto, between which the carrier (3) is passed.

4. Apparatus according to Claim 1 or 3, **characterized in that** at least the anvil (10) performs oscillations above 20 kHz.

5. Apparatus according to any one of Claims 1 to 4, **characterized in that** the ultrasonic unit (9, 10) or the laser unit is disposed before or after the coating unit (6) in the throughfeed direction (R) of the carrier (3) .

6. Apparatus according to any one of Claims 1 to 5, **characterized in that** the ultrasonic unit (9, 10) or the laser unit is equipped with an additional edge welding unit.

7. Apparatus according to any one of Claims 1 to 6, **characterized in that** the ultrasonic unit (9, 10) or the laser unit is designed as a combined welding/separating unit.

## Revendications

1. Dispositif de fabrication d'un ruban adhésif (2), notamment d'une bande d'enroulement pour enrober un produit allongé, de préférence d'une bande d'enroulement pour enrober des jeux de câbles dans des automobiles, avec une unité de réserve (5) pour alimenter un support textile en forme de bande (3) de ruban adhésif (2) surtout en fibres de matière plastique et avec une unité de revêtement (6) pour appliquer un revêtement adhésif (4) au moins en forme de bande sur au moins un côté du support (3), **caractérisé en ce qu'**
- en plus une unité à ultrasons (9, 10) constituée réglable par rapport au support (3) passant à travers est réalisée dans le support (3) pour effectuer des perforations sous la forme de perforations transversales (11), sachant que
- l'unité à ultrasons (9, 10) peut être déplacée dans la direction de passage (R) et/ou transversalement à la direction de passage (R), et sachant que
- le déplacement a lieu en plus perpendiculairement à la direction de passage (R) du support (3) et qu'il est de ce fait possible selon nécessité de mettre en place l'unité à ultrasons (9, 10) sur le support (3) et de l'enlever à nouveau du support (3) .

2. Dispositif de fabrication d'un ruban adhésif (2), notamment d'une bande d'enroulement pour enrober du produit allongé , de préférence d'une bande d'enroulement pour enrober des jeux de câbles dans des automobiles, avec une unité de réserve (5) pour alimenter un support textile en forme de bande (3) du ruban adhésif (2) surtout en fibres de matière plastique et avec une unité de revêtement (6) pour appliquer un revêtement adhésif (4) au moins en forme de bande sur au moins un côté du support (3), **caractérisé en ce qu'**
- en plus une unité laser constituée réglable par rapport au support (3) passant à travers est réalisée dans le support (3) pour effectuer des perforations sous la forme de perforations transversales (11), sachant que
- l'unité laser peut être déplacée dans la direction de passage (R) et/ou transversalement à la direction de passage (R), et sachant que
- le déplacement a lieu en plus perpendiculairement à la direction de passage (R) du support (3) et qu'il est de ce fait possible selon nécessité de mettre en place l'unité laser sur le support (3) et de l'enlever à nouveau du support (3).

3. Dispositif selon la revendication 1, **caractérisée en ce que** l'unité à ultrasons (9, 10) est dotée d'un sonomètre (9) et d'une enclume (10) opposée entre lesquels le support (3) est passé.

4. Dispositif selon la revendication 1 ou 3, **caractérisée en ce qu'**au moins l'enclume (10) exécute des vibrations au-dessus de 20 kHz.

5. Dispositif selon l'une quelconque des revendications 1 à 4, **caractérisée en ce que** l'unité à ultrasons (9, 10) ou l'unité laser est disposée avant ou après l'unité de revêtement (6) dans la direction de passage (R) du support (3).

6. Dispositif selon l'une quelconque des revendications 1 à 5, **caractérisée en ce que** l'unité à ultrasons (9, 10) ou l'unité laser est dotée d'une unité de soudure des bords supplémentaire.

7. Dispositif selon l'une quelconque des revendications 1 à 6, **caractérisée en ce que** l'unité à ultrasons (9, 10) ou l'unité laser est constituée sous la forme d'une unité soudure/sectionnement combinée.
